# EUROPÄISCHE PATENTSCHRIFT

(11) **EP 1 307 623 B1**
(45) Veröffentlichungstag und Bekanntmachung des Hinweises auf die Patenterteilung: **24.11.2004**
(21) Anmeldenummer: 01956379.0
(22) Anmeldetag: 26.07.2001
(51) Int. Cl.: E04G 1/22, B65G 1/04

(54) **ARBEITSPLATTFORM FÜR EIN REGALLAGER**
WORK PLATFORM FOR HIGH-BAY RACKING
PLATE-FORME DE TRAVAIL POUR UN ENTREPOT A RAYONNAGE

(30) Priorität: 08.08.2000 DE 10038666
(43) Veröffentlichungstag der Anmeldung: 07.05.2003
(73) Patentinhaber: Siemens Aktiengesellschaft, 80333 München (DE)
(72) Erfinder: LEDERER, Jürgen, 91244 Reichenschwand (DE)
(86) Internationale Anmeldenummer: PCT/DE2001/002827
(87) Internationale Veröffentlichungsnummer: WO 2002/012655

(56) Entgegenhaltungen:
- WO-A-99/13184
- DE-A- 4 121 205
- DE-A- 4 324 909
- FR-A- 2 583 450
- GB-A- 759 187
- US-A- 3 800 963
- US-A- 4 488 326

## Beschreibung

Die Erfindung betrifft ein Regallager mit Arbeitsplattform gemäß dem Oberbegriff des Patentanspruchs 1. Ein Regallager mit Arbeitsplattform ist z.B. durch DE-A-4 121 205 bekannt.

Hochregale werden beispielsweise als Palettenregale gebaut, wobei in den einzelnen Regalfächern Auflageträger in Form von Längstraversen vorgesehen sind, auf denen genormte Paletten gelagert werden. Bei Hochregallägern, die in Silobauform bis zu einer Höhe von 50 Metern errichtet werden, kann das Problem bestehen, daß Bauteile und Einrichtungen in größerer Höhe, wie beispielsweise Regalbauteile selbst, Regalbediengeräte, Sprinkleranlagen, Dachelemente sowie sonstige Elemente der Haustechnik, wie Beleuchtung, Belüftung, Rauch-Wärme-Abzugsanlagen, in bestimmten Fällen - je nach Lage der Bauteile - für Montage und Wartung schwer zugänglich sind. Um an diesen Einrichtungen Montagearbeiten ausführen zu können, mußte man beispielsweise vorhandene Einrichtungen, wie eine Mastaufstiegsleiter, Bühnen am Mastkopf, ein Hubgerüst oder auch begehbar ausgeführte Regalfächer, als Zugang bzw. Arbeitsbasis benutzen, wobei jedoch nicht alle Stellen im Lager auf diese Weise einfach erreichbar waren. Daneben war es üblich, provisorische Zugangsmöglichkeiten zu schaffen, etwa in Form von Planken, mit denen eine Standfläche in einem Regal aufgebaut wurde. Für umfangreichere Arbeiten wurden freistehende Gerüste aufgestellt. Letztere sind allerdings sehr zeitraubend im Aufbau und kostspielig, während sonstige Provisorien eine relativ große Absturzgefahr für die arbeitenden Personen mit sich bringen.

Ziel der vorliegenden Erfindung ist es ein Regallager mit, einer Montage- und Arbeitsplattform zu schaffen, die universell einsetzbar und schnell an Ort und Stelle zu bringen ist, die eine gute Zugänglichkeit zu allen Stellen in einem Hochregal eröffnet, die ein komfortables Arbeiten an beliebigen Einsatzplätzen ermöglicht und dabei auch eine erhöhte Sicherheit gegen Absturzgefahr bietet.

Erfindungsgemäß wird zur Lösung dieses Problems die Arbeitsplattform mit den im kennzeichnenden Teil des Anspruchs 1 definierten Merkmalen versehen.

Die erfindungsgemäße Arbeitsplattform kann aufgrund ihrer Anpassung an die Regalabmessungen bzw. an die Abmessungen und Abstände der Auflageträger mit den üblichen Fördereinrichtungen des Regallagers, beispielsweise mit einem Regalbediengerät, zum jeweiligen Einsatzort in einem beliebigen Regalfach transportiert werden. Vorzugsweise hat das Tragegestell deshalb die Abmessungen der Grundfläche einer Norm-Palette, zum Beispiel einer Euro-Palette.

Die erfindungsgemäße Arbeitsplattform ermöglicht ein komfortables Arbeiten durch eine sichere Standfläche am jeweiligen Einsatzort. Zur Stabilisierung dieser Standfläche ist zudem vorgesehen, daß das Tragegestell mittels Feststellelementen, beispielsweise Klemmpratzen oder dergleichen, an den Längsträgern fixierbar ist. Zur Erhöhung der Sicherheit gegen Absturzgefahr ist zudem vorzugsweise der begehbare Raum über dem Boden der Plattform an den Seiten zumindest teilweise mit Sicherungsvorrichtungen begrenzt. Solche Sicherungsvorrichtungen können beispielsweise durch stabile Wände, durch Gitter oder durch Geländer gebildet sein.

Um auch bei sehr hohen Regalfächern, beispielsweise im Dachbereich des Lagerhauses, ein bequemes Arbeiten zu ermöglichen, ist weiterhin in einer vorzugsweisen Ausgestaltung der Erfindung vorgesehen, daß der Boden gegenüber dem Tragegestell in seiner Höhe verstellbar ist. Die Höhenverstellung kann mittels üblicher Hubtechnik erfolgen, beispielsweise in Form eines Scherenhubtisches. Die Betätigung der Hubeinrichtung bzw. des Hubtisches kann ebenfalls mit üblichen Mitteln, etwa mittels Seilzugtechnik oder mittels eines pneumatischen oder hydraulischen Druckzylinders, erfolgen.

In weiterer vorteilhafter Ausgestaltung der erfindungsgemäßen Arbeitsplattform ist die Standfläche durch an den Boden zumindest an einer Seite ansetzbare Montageplanken verlängerbar. Auf diese Weise kann die lichte Gasse zwischen zwei Regalzeilen überspannt werden, so daß auch eine Standposition für Arbeiten im Bereich der lichten Gasse möglich wird. Die Montageplanken können beispielsweise parallel zur Bodenplatte und mit dieser ineinander geführt sein, so daß sie bei Bedarf teleskopartig ausfahrbar sind. Sie können aber auch abschnittsweise klappbar gestaltet oder auch als Einzelteile an dem Boden und aneinander befestigt werden. In jedem Fall ist es von Vorteil, das freie Ende der Montageplanken in dem der Montageplattform gegenüberliegenden Regalfach abzustützen, entweder durch einen mit den Montageplanken verbundenen Stempel oder durch einen eigenen, in dem gegenüberliegenden Regalfach befestigten Auflagerbock. Um auch die vergrößerte Standfläche auf den Montageplanken seitlich abzusichern, sind hier in gleicher Weise wie bei der eigentlichen Arbeitsplattform Sicherungsvorrichtungen vorgesehen, beispielsweise in Form von teleskopartig ausziehbaren Sicherungsgittern oder in Form von einzeln aneinandergereihten, stangenartigen Geländerelementen.

Die Erfindung wird nachfolgend an Ausführungsbeispielen anhand der Zeichnung näher erläutert. Es zeigt
Figur 1 eine vereinfachte, ausschnittweise Ansicht eines Hochregallagers,
Figur 2 eine Arbeitsplattform in montierter Position,
Figur 3 eine Ansicht III von oben auf die Arbeitsplattform von Figur 2, jedoch in eingefahrenem Zustand und
Figuren 4 bis 6 eine abgewandelte Ausführungsform einer erfindungsgemäßen Arbeitsplattform in ausgefahrenem Zustand, in drei Ansichten, nämlich in Seitenansicht, in Draufsicht und in Vorderansicht.

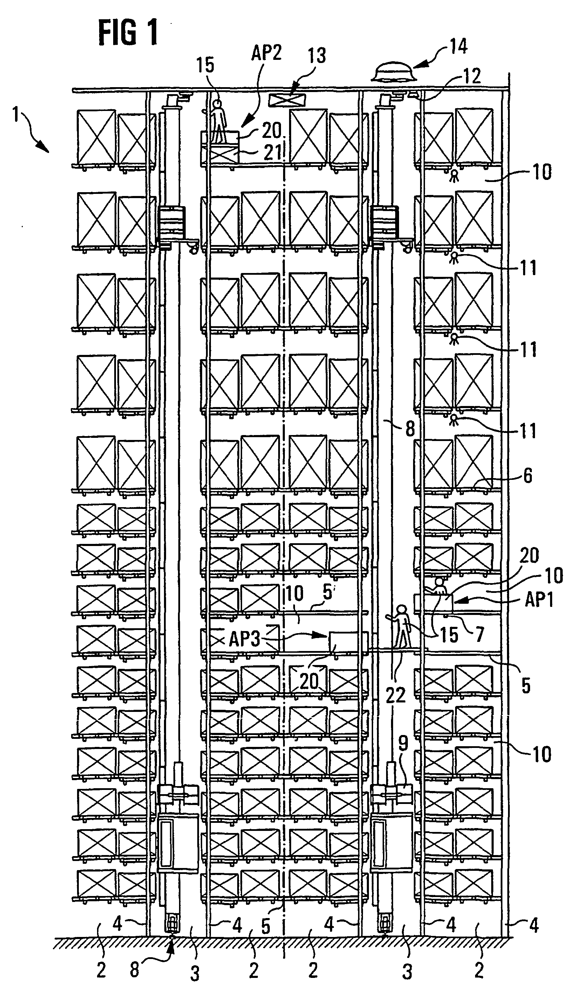

Figur 1 zeigt schematisch den Einsatzbereich einer erfindungsgemäßen Arbeitsplattform. Dargestellt ist ein Abschnitt eines Hochregallagers 1 mit mehreren Regalen 2, wobei jeweils zwei Regale von einer zwischenliegenden Transportgasse 3 aus zugänglich sind. Die Regale selbst werden durch senkrechte Steher oder Stützen 4 gebildet, welche jeweils mit Querriegeln 5 verbunden sind, wodurch die einzelnen Regalfächer 10 gebildet sind. Im dargestellten Beispiel sind in jedem Regalfach jeweils zwei beladene Paletten 6 auf Längsträgern 7 hintereinander angeordnet. Zum Transport der Paletten in die einzelnen Regelfächer und aus diesen heraus dient ein Regalbediengerät 8, das mit einem Mast und einem Fahrwerk beliebig in der Transportgasse 3 verfahrbar ist und mit einem Hubwagen 9 jedes Regalfach erreicht. Derartige Regelbediengeräte sind bekannt und brauchen deshalb hier nicht näher beschrieben zu werden. Neben dem eigentlichen Regalaufbau und dem Regalbediengerät sind aber in dem Regallager auch noch andere Einrichtungen vorhanden, wie Sprinkleranlagen 11, Beleuchtung 12, Lüftungskanäle 13 und Rauch/Wärme-Abzugsklappen 14.

All diese Einrichtungen müssen beispielsweise für Umbauarbeiten, Wartung und Reparaturen im gesamten Lagergebäude zugänglich sein. Zu diesem Zweck ist erfindungsgemäß eine Arbeitsplattform 20 vorgesehen, die nachfolgend näher beschrieben wird. In Figur 1 ist die Arbeitsplattform 20 in drei verschiedenen Einsatzfällen gezeigt. Im Einsatzfall AP1 ist die Arbeitsplattform 20 in ihrer Grundausführung in ein Regalfach gestellt, wobei eine Person 15 in dem Regalfach selbst arbeitet. In der Einsatzform AP2 steht die Arbeitsplattform 20 in einem besonders hohen Regalfach im Dachbereich des Gebäudes, wobei verschiedene Installationen an der Decke erreichbar sein müssen. In diesem Fall ist deshalb der Boden der Arbeitsplattform 20 über eine Hubvorrichtung 21 angehoben, so daß die Person 15 bequem die Decke des Regalfaches bzw. den Mastkopfbereich des Regalbediengerätes erreicht.

Im Einsatzfall AP3 sitzt die Arbeitsplattform 20 wie im Fall AP1 in einem normalen Regalfach. Jedoch ist der Boden über Montageplanken 22 verlängert, welche die lichte Transportgasse 3 überbrücken und in dem gegenüberliegenden Regalfach aufliegen. Die Person 15 steht in diesem Fall auf den ausgefahrenen Montageplanken 22, so daß sie im Bereich der lichten Transportgasse 3 arbeiten kann. Der genaue Aufbau der Arbeitsplattform wird anhand der nachfolgenden Figuren näher erläutert.

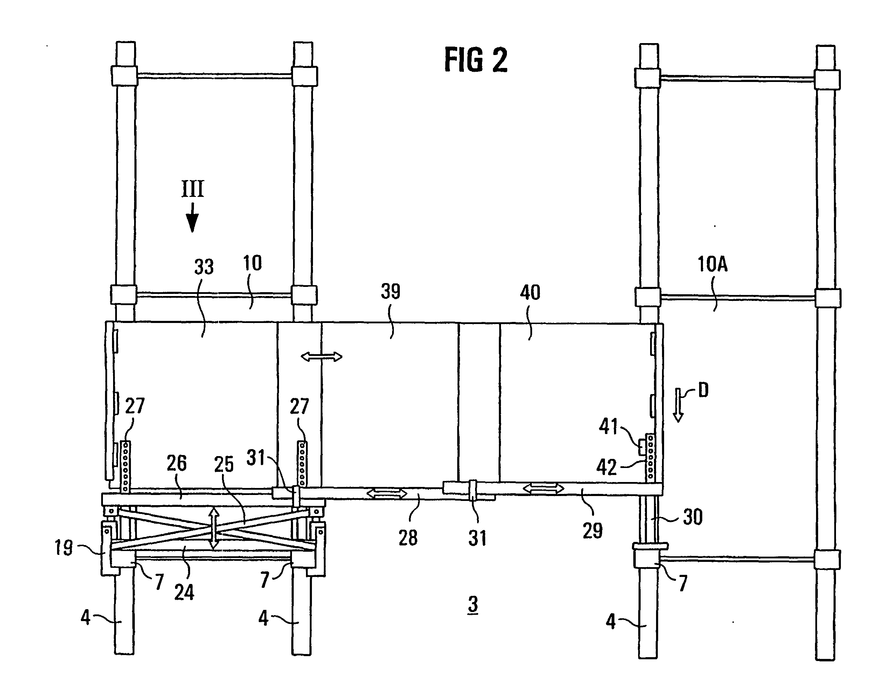

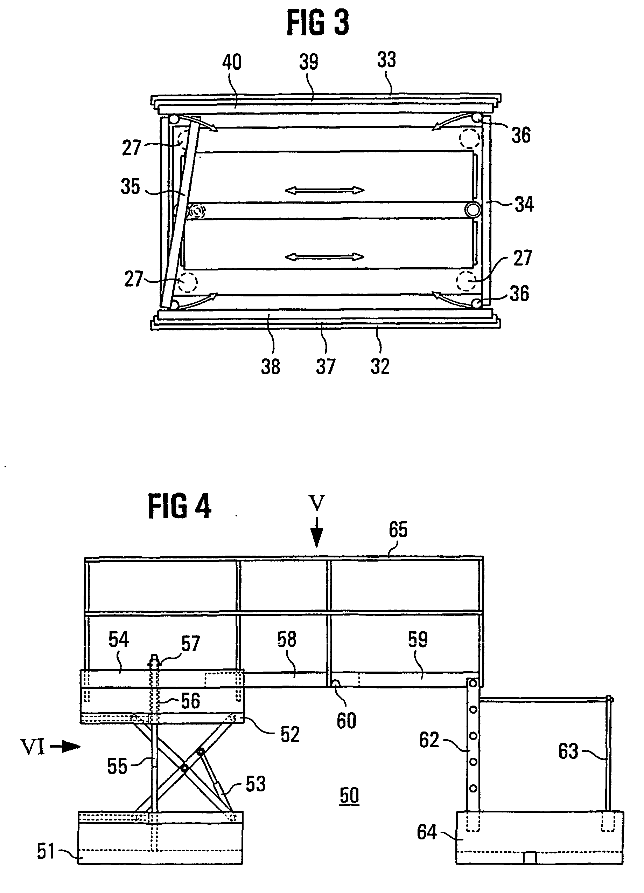

In Figur 2 und 3 ist ein erstes Ausführungsbeispiel der Arbeitsplattform 20 dargestellt. Diese besitzt ein Tragegestell 24, das wie eine Normpalette durch das Regalbediengerät von der Transportgasse 3 aus in das Regalfach 10 gestellt wird und auf den Längsträgern 7 aufliegt. Mit schwenkbaren Klemmpratzen 19, deren Klemmechanismus nicht im einzelnen dargestellt ist, wird das Tragegestell an den Längsträgern 7 fixiert.

Auf dem Tragegestell 24 ist über einen Scherenhubtisch 25 eine Bodenplatte 26 befestigt, die eine sichere Standfläche für eine Person bietet. Durch den Scherenhubtisch kann die Bodenplatte in der Höhe verstellt werden, beispielsweise um etwa 50 cm, um für eine darauf stehende Person eine komfortable Arbeitshöhe einzustellen. Der Scherenhubtisch kann in bekannter Weise angetrieben werden, beispielsweise mittels einer Handwinde mit Sperradbremse, die über einen Seilzug, über eine Kette oder dergleichen wirkt. In gleicher Weise kann die Hebelschere aber auch über einen Hubzylinder pneumatisch oder hydraulisch, von Hand oder von Fuß oder mit einem Kompressor, angetrieben werden. Anstelle des Scherenhubtisches könnte die Bodenplatte 26 aber auch unmittelbar über einen oder mehrere Hubzylinder hydraulisch oder pneumatisch angehoben werden. Die eingestellte Hubhöhe kann dann an Loch-Führungshülsen 27 mit entsprechenden Sicherungsstiften gesichert werden.

Zu einer Verlängerung der Standfläche der Arbeitsplattform sind mit der Bodenplatte 26 teleskopartig ausfahrbare Montageplanken 28 und 29 verbunden, die die Transportgasse 3 überbrücken und in dem gegenüberliegenden Regalfach 10A über einen Stempel 30 auf dem dortigen Längsträger 7 abgestützt werden. Die Führung der jeweiligen Montageplanken 28 und 29 mit der Bodenplatte 26 und deren Verschiebemechanismus ist nicht dargestellt, da es sich hierbei um bekannte Mechanismen handelt. Auch in diesem Fall kann ein üblicher Antrieb, etwa mit einer Handkurbel über einen Seilzug oder einen Kettenzug oder auch ein pneumatischer oder hydraulischer Antrieb über einen Druckzylinder vorgesehen werden, die Montageplanken können aber auch von Hand verschoben werden. Natürlich müssen die einzelnen Montageplanken aneinander und an der Bodenplatte 26 auch im ausgefahrenen Zustand befestigt und gesichert sein; solche Sicherungen 31 sind jedoch nur schematisch angedeutet.

Zur seitlichen Sicherung einer Person auf der Arbeitsplattform besitzt diese beiderseits jeweils Gitterwände 32, 33 als Geländer sowie an der Vorderseite und an der Rückseite jeweils ein schwenkbares Stirngitter 34 bzw. 35. Diese Stirngitter besitzen beiderseits jeweils Steckbolzenscharniere 36, so daß sie je nach Bedarf wahlweise nach der einen oder der anderen Seite geöffnet und geschwenkt werden können.

Um auch beim Ausfahren der Montageplanken 28 und 29 die Standfläche zu sichern, sind zusätzliche Gitterwände 37 und 38 sowie 39 und 40 über Führungen mit den Gitterwänden 32 und 33 verbunden und mit den Montageplanken 28 und 29 teleskopartig ausziehbar. Das Stirngitter 34 ist auf der Montageplanke 29 gelagert und wird mit dieser zum gegenüberliegenden Regalfach 10A gezogen. An diesem Stirngitter 34 sind auch Sicherungswinkel 41 angebracht, an denen der obere, mit Löchern versehene Abschnitt 42 des Stempels 30 mittels Sicherungsstiften fixiert werden kann, nachdem er auf die gleiche Höhe ausgezogen wurde, auf die die Bodenplatte 26 angehoben wurde.

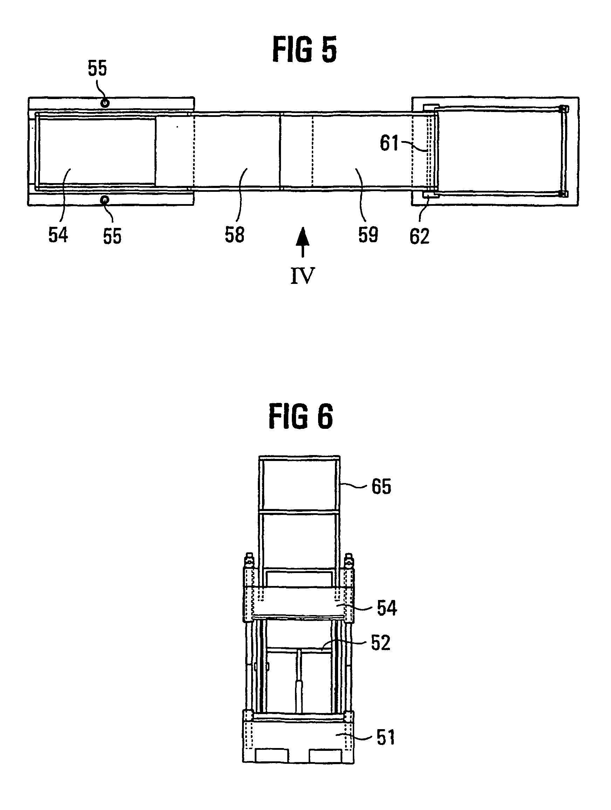

In den Figuren 4 bis 6 ist eine etwas abgewandelte Ausführungsform der Arbeitsplattform dargestellt. Die dort gezeigte Arbeitsplattform 50 besitzt ein Tragegestell 51, das mit nicht weiter dargestellten Klemmelementen an dem Längsträger 7 des Regalfaches befestigt wird. Ein Scherenhubtisch 52, der über einen Hubzylinder 53 betätigt wird, trägt eine Bodenplatte 54, ähnlich wie im vorhergehenden Beispiel. Der Hubzylinder 53 kann beispielsweise pneumatisch oder hydraulisch über eine Fußpumpe oder über einen Kompressor betätigt werden. Beiderseits des Scherenhubtisches 52 sind Führungsstangen 55 angeordnet, die in entsprechenden Führungshülsen 56 geführt sind und mit Sicherungsstiften 57 fixiert werden können.

Zur Überbrückung der Transportgasse 3 sind auch in diesem Fall zusätzliche Montageplanken 58 und 59 vorgesehen, die über ein Scharnier 60 klappbar sind und zusammengeklappt unter die Bodenplatte 54 einschiebbar sind. Im ausgezogenen und ausgeklapptem Zustand liegt das freie Ende der Montageplanke 59 auf einer Querstrebe 61 eines Sprossenbockes 62 auf, der mit einer rahmenartigen Versteifung 63 auf einem eigenen Tragegestell 64 befestigt ist, welches seinerseits in dem gegenüberliegenden Regalfach 10A (siehe Figur 2) auf den entsprechenden Längsträgern befestigt wird.

Zur seitlichen Sicherung des Bewegungsraumes auf der Arbeitsplattform 50 dient in diesem Fall ein aus einzelnen Stangen zusammengestecktes Geländer 65, das sowohl auf der Bodenplatte 54 als auch auf den Montageplanken 58 und 59 montiert wird.

Im übrigen sei noch erwähnt, daß natürlich einzelne Elemente, wie ausziehbare Montageplanken oder Geländer zwischen den verschiedenen Ausführungsformen austauschbar sind und daß sie auch durch andere gleichwirkende Elemente ersetzt werden können.

## Patentansprüche

1. Regallager mit Arbeitsplattform, welches horizontale Regalfächer (10) in einer Mehrzahl von übereinander angeordneten Lagerebenen aufweist, wobei jedes Regalfach Auflageträger (7) zur Aufnahme von mindestens einem Ladungsträger (8) aufweist und wobei Transportvorrichtungen (9) vorgesehen sind, um die Ladungsträger (8) horizontal und/oder vertikal bis zum Eingang eines Regalfaches (10), in das Regalfach hinein oder von dem Regalfach heraus zu transportieren, **dadurch gekennzeichnet, dass** die Arbeitsplattform ein Tragegestell (24;51) aufweist, das wie ein Ladungsträger (8) an die Abmessungen der Regalfächer (10) zur Abstützung auf den Auflageträgern (7) angepasst ist, wobei das Tragegestell (24;51) mittels Feststellelementen (19) an den Auflageträgern (7) fixierbar und auf dem Tragegestell (24; 51) ein begehbarer Boden (26;54) für mindestens eine Person (15) befestigt ist.

2. Regallager nach Anspruch 1,
**dadurch gekennzeichnet,**
**dass** das Tragegestell (24;51) der Arbeitsplattform mit seiner Grundfläche einer Normpalette entspricht.

3. Regallager nach Anspruch 1 oder 2,
**dadurch gekennzeichnet,**
**dass** der Raum über dem Boden (26;54) der Arbeitsplattform zumindest teilweise mit seitlichen Sicherungsvorrichtungen (32,33,34,35;65) versehen ist.

4. Regallager nach Anspruch 3,
**dadurch gekennzeichnet,**
**dass** als Sicherungsvorrichtungen der Arbeitsplattform jeweils Seitenwände (32,33,34,35) vorgesehen sind.

5. Regallager nach Anspruch 4,
**dadurch gekennzeichnet,**
**dass** die Seitenwände der Arbeitsplattform als Gitterwände (32,33,34,35) ausgebildet sind.

6. Regallager nach Anspruch 3,
**dadurch gekennzeichnet,**
**dass** die Sicherungsvorrichtungen der Arbeitsplattform durch vorzugsweise steckbar befestigte Stangen (65) gebildet sind.

7. Regallager nach einem der Ansprüche 1 bis 6,
**dadurch gekennzeichnet,**
**dass** der Boden der Arbeitsplattform (26;54) gegenüber dem Tragegestell (24;51) in der Höhe verstellbar ist.

8. Regallager nach Anspruch 7,
**dadurch gekennzeichnet,**
**dass** zur Verstellung des Bodens der Arbeitsplattform eine Hubvorrichtung (25;52,53) vorgesehen ist.

9. Regallager nach Anspruch 8,
**dadurch gekennzeichnet,**
**dass** zur Höhenverstellung des Bodens der Arbeitsplattform ein Scherenhubtisch (25;52,53) vorgesehen ist.

10. Regallager nach Anspruch 9,
**dadurch gekennzeichnet,**
**dass** der Scherenhubtisch (25) der Arbeitsplattform durch einen Seilzug betätigbar ist.

11. Regallager nach Anspruch 9,
**dadurch gekennzeichnet,**
**dass** der Scherenhubtisch (52) der Arbeitsplattform mittels eines Druckzylinders (53) betätigbar ist.

12. Regallager nach einem der Ansprüche 1 bis 11,
**dadurch gekennzeichnet,**
**dass** die Standfläche des Bodens (26;54) der Arbeitsplattform zumindest nach einer Seite mittels anbaubarer Montageplanken (28,29;58,59) verlängerbar ist.

13. Regallager nach Anspruch 12,
**dadurch gekennzeichnet,**
**dass** die Montageplanken (28,29) der Arbeitsplattform mehrteilig ausgeführt, parallel zum Boden (26) stapelbar und teleskopartig ausfahrbar sind.

14. Regallager nach Anspruch 12,
**dadurch gekennzeichnet,**
**dass** die Montageplanken (58,59) der Arbeitsplattform mehrteilig parallel zum Boden stapelbar und nach Bedarf ausklappbar sind.

15. Regallager nach einem der Ansprüche 12 bis 14,
**dadurch gekennzeichnet,**
**dass** die Montageplanken (28,29;58,59) der Arbeitsplattform in ihrer Länge an die Breite der Transportgasse (3) angepasst und über eine Stützvorrichtung (30;62) in einem gegenüberliegenden Regalfach (10A) abstützbar sind.

16. Regallager nach Anspruch 14,
**dadurch gekennzeichnet,**
**dass** als Stützvorrichtung ein Stempel (30) verstellbar an dem freien Ende einer Montageplanke (29) gelagert ist.

17. Regallager nach Anspruch 14,
**dadurch gekennzeichnet,**
**dass** in dem der Arbeitsplattform (20) gegenüberliegenden Regalfach (10A) ein Auflagebock (62) zur Abstützung der Montageplanken (58,59) vorgesehen ist.

18. Regallager nach einem der Ansprüche 12 bis 17,
**dadurch gekennzeichnet,**
**dass** an den Montageplanken (28,29) der Arbeitsplattform (20) beiderseits Sicherungseinrichtungen (37,38,39,40;65) wie an den Seiten des Bodens (26;54) vorgesehen sind.

## Claims

1. Rack store having a working platform, the store having horizontal rack compartments (10) in a plurality of storage levels arranged one above another, each rack compartment having supporting carriers (7) for receiving at least one load carrier (8), and transporting devices (9) being provided in order to transport the load carriers (8) horizontally and/or vertically up to the input of a rack compartment (10), into the rack compartment or out from the rack compartment, **characterized in that** the working platform has a carrying frame (24; 51) which, like a load carrier (8), is matched to the dimensions of the rack compartments (10) for support on the supporting carriers (7), it being possible for the carrying frame (24; 51) to be fixed on the supporting carriers (7) by means of fixing elements (19), and a floor (26; 54) which can be walked on and is intended for at least one person (15) being fastened on the carrying frame (24; 51).

2. Rack store according to Claim 1, **characterized in that** the area of the carrying frame (24; 51) of the working platform corresponds to a standard pallet.

3. Rack store according to Claim 1 or 2, **characterized in that** the space above the floor (26; 54) of the working platform is at least partially provided with lateral securing devices (32, 33, 34, 35; 65).

4. Rack store according to Claim 3, **characterized in that** side walls (32, 33, 34, 35) are provided in each case as securing devices of the working platform.

5. Rack store according to Claim 4, **characterized in that** the side walls of the working platform are designed as lattice walls (32, 33, 34, 35).

6. Rack store according to Claim 3, **characterized in that** the securing devices of the working platform are formed by rods (65) which are preferably fastened in a manner such that they can be plugged in.

7. Rack store according to one of Claims 1 to 6, **characterized in that** the height of the floor of the working platform (26; 54) can be adjusted in relation to the carrying frame (24; 51).

8. Rack store according to Claim 7, **characterized in that** a lifting device (25; 52, 53) is provided for adjusting the floor of the working platform.

9. Rack store according to Claim 8, **characterized in that** a scissor-type lifting table (25; 52, 53) is provided for adjusting the height of the floor of the working platform.

10. Rack store according to Claim 9, **characterized in that** the scissor-type lifting table (25) of the working platform can be actuated by a control cable.

11. Rack store according to Claim 9, **characterized in that** the scissor-type lifting table (52) of the working platform can be actuated by means of a pressure cylinder (53).

12. Rack store according to one of Claims 1 to 11, **characterized in that** the standing surface of the floor (26; 54) of the working platform can be extended in length at least on one side by means of mounting planks (28, 29; 58, 59) which can be attached.

13. Rack store according to Claim 12, **characterized in that** the mounting planks (28, 29) of the working platform are of multipart design, can be stacked parallel to the floor (26) and can be extended telescopically.

14. Rack store according to Claim 12, **characterized in that** the mounting planks (58, 59) of the working platform can be stacked in a multipart manner parallel to the floor and can be swung out as required.

15. Rack store according to one of Claims 12 to 14, **characterized in that** the length of the mounting planks (28, 29; 58, 59) of the working platform can be matched to the width of the transporting aisle (3) and can be supported in an opposite rack compartment (10A) via a supporting device (30; 62).

16. Rack store according to Claim 14, **characterized in that**, as the supporting device, a prop (30) is mounted adjustably on the free end of a mounting plank (29).

17. Rack store according to Claim 14, **characterized in that** a supporting stand (62) for supporting the mounting planks (58, 59) is provided in the rack compartment (10A) lying opposite the working platform (20).

18. Rack store according to one of Claims 12 to 17, **characterized in that** securing devices (37, 38, 39, 40; 65), such as on the sides of the floor (26; 54), are provided on both sides of the mounting planks (28, 29) of the working platform (20).

## Revendications

1. Entrepôt à rayonnages équipé d'une plateforme de travail et comportant des casiers de rayonnage (10) horizontaux placés dans une multiplicité de plans d'entreposage situés les uns au-dessus des autres, chaque casier de rayonnage présentant des supports de rangement (7) destinés à recevoir au moins un porteur de charges (8) et des dispositifs de transport (9) étant prévus pour transporter les porteurs de charges (8) horizontalement et/ou verticalement jusqu'à l'entrée d'un casier de rayonnage (10), pour les introduire dans le casier de rayonnage ou pour les sortir du casier de rayonnage,
**caractérisé en ce que** la plateforme de travail présente un bâti de soutien (24 ; 51) qui est adapté comme un porteur de charges (8) aux dimensions des casiers de rayonnage (10) pour être appuyé sur les supports de rangement (7) , le bâti de soutien (24 ; 51 ) pouvant être fixé aux supports de rangement (7) à l'aide d'éléments de maintien (19) et un plancher (26 ; 54) sur lequel peut marcher au moins une personne (15) étant fixé sur le bâti de soutien (24 ; 51).

2. Entrepôt à rayonnages selon la revendication 1, **caractérisé en ce que** le bâti de soutien (24 ; 51 ) de la plateforme de travail correspond à une palette standard par sa surface de base.

3. Entrepôt à rayonnages selon la revendication 1 ou 2, **caractérisé en ce que** l'espace au-dessus du plancher (26 ; 54) de la plateforme de travail est au moins en partie muni de dispositifs de protection (32, 33, 34, 35 ; 65) latéraux.

4. Entrepôt à rayonnages selon la revendication 3, **caractérisé en ce qu'**on prévoit respectivement des parois latérales (32, 33, 34, 35) pour servir de dispositifs de protection à la plateforme de travail.

5. Entrepôt à rayonnages selon la revendication 4, **caractérisé en ce que** les parois latérales de la plateforme de travail sont conçues sous forme de parois en treillis (32, 33, 34, 35).

6. Entrepôt à rayonnages selon la revendication 3, **caractérisé en ce que** les dispositifs de protection de la plateforme de travail sont de préférence formés par des barres (65) fixées de façon à pouvoir être emmanchées.

7. Entrepôt à rayonnages selon l'une des revendications 1 à 6, **caractérisé en ce que** le plancher de la plateforme de travail (26 ; 54) peut être réglé en hauteur par rapport au bâti de soutien (24 ; 51).

8. Entrepôt à rayonnages selon la revendication 7, **caractérisé en ce qu'**on prévoit un dispositif de levage (25 ; 52, 53) pour déplacer le plancher de la plateforme de travail.

9. Entrepôt à rayonnages selon la revendication 8, **caractérisé en ce qu'**on prévoit une table à ciseaux élévateurs (25 ; 52, 53) pour régler en hauteur le plancher de la plateforme de travail.

10. Entrepôt à rayonnages selon la revendication 9, **caractérisé en ce que** la table à ciseaux élévateurs (25) de la plateforme de travail peut être manoeuvrée par un câble.

11. Entrepôt à rayonnages selon la revendication 9, **caractérisé en ce que** la table à ciseaux élévateurs (52) de la plateforme de travail peut être manoeuvrée par un vérin (53).

12. Entrepôt à rayonnages selon l'une des revendications 1 à 11, **caractérisé en ce que** la surface de travail du plancher (26 ; 54) de la plateforme de travail peut être prolongée au moins d'un côté à l'aide de planches de montage (28, 29 ; 58, 59) rajoutables.

13. Entrepôt à rayonnages selon la revendication 12, **caractérisé en ce que** les planches de montage (28, 29) de la plateforme de travail sont conçues en plusieurs parties, elles peuvent être empilées parallèlement au plancher (26) et être déployées télescopiquement.

14. Entrepôt à rayonnages selon la revendication 12, **caractérisé en ce que** les planches de montage (58, 59) de la plateforme de travail peuvent être empilées en plusieurs parties parallèlement au plancher et être déployées suivant les besoins.

15. Entrepôt à rayonnages selon l'une des revendications 12 à 14, **caractérisé en ce que**, quant à leur longueur, les planches de montage (28, 29 ; 58, 59) de la plateforme de travail sont adaptées à la largeur de l'allée de transport (3) et peuvent être appuyées dans un casier de rayonnage (10A) opposé au moyen d'un dispositif de soutien (30 ; 62).

16. Entrepôt à rayonnages selon la revendication 14, **caractérisé en ce qu'**un étai (30) qui sert de dispositif de soutien est monté de façon réglable à l'extrémité libre d'une planche de montage (29).

17. Entrepôt à rayonnages selon la revendication 14, **caractérisé en ce qu'**on prévoit dans le casier de rayonnage (10A) opposé à la plateforme de travail (20) un chevalet de tablette (62) destiné à soutenir les planches de montage (58, 59).

18. Entrepôt à rayonnages selon l'une des revendications 12 à 17, **caractérisé en ce que** des dispositifs de protection (37, 38, 39, 40 ; 65) sont prévus de chaque côté des planches de montage (28, 29) de la plateforme de travail (20) comme sur les côtés du plancher (26 ; 54).
